# EUROPÄISCHE PATENTSCHRIFT

(11) **EP 0 633 919 B1**
(45) Veröffentlichungstag und Bekanntmachung des Hinweises auf die Patenterteilung: **21.01.1998**
(21) Anmeldenummer: 93906614.8
(22) Anmeldetag: 25.03.1993
(51) Int. Cl.: C09J 177/08, C08L 77/08

(54) **SCHMELZKLEBSTOFF**
HOT-MELT ADHESIVE
COLLE FUSIBLE

(30) Priorität: 03.04.1992 DE 4211125
(43) Veröffentlichungstag der Anmeldung: 18.01.1995
(73) Patentinhaber: Henkel Kommanditgesellschaft auf Aktien, 40191 Düsseldorf (DE)
(72) Erfinder: HEUCHER, Reimar, D-5024 Pulheim 4 (DE); WICHELHAUS, Jürgen, D-5600 Wuppertal 1 (DE); SCHÜLLER, Kurt, D-4019 Monheim 2 (DE); KOPANNIA, Siegfried, D-4000 Düsseldorf 1 (DE); ROSSINI, Angela, I-20080 Casarile (IT)
(86) Internationale Anmeldenummer: EP9300728
(87) Internationale Veröffentlichungsnummer: WO9320166

(56) Entgegenhaltungen:
- EP-A- 0 354 521
- DE-A- 3 504 804
- Patent Abstracts of Japan, Band 004, Nr. 140 (C-026), 3. Oktober 1980, & JP,A, 55090575 (TOKYO INK.) 9. Juli 1980

## Beschreibung

Die Erfindung betrifft einen Schmelzklebstoff, seine Herstellung und Verwendung sowie damit hergestellte Formteile.

Schmelzklebstoffe sind bei Raumtemperatur feste Klebstoffe, die zum Bewirken einer Verklebung vorübergehend geschmolzen werden. Sie basieren im wesentlichen auf Polyamiden, Polyolefinen oder Polyestern sowie deren Mischungen. Durch Zusätze werden sie entsprechend den Verwendungszwecken weiter optimiert.

So setzt sich ein Schmelzklebstoff zur Verklebung von unvorbehandeltem Polyethylen und Kupfer gemäß der DE-OS 35 04 804 im wesentlichen aus folgenden verträglichen Komponenten zusammen:
a) Polyamide auf Basis von dimerisierten Fettsäuren, aliphatischen Aminen und modifizierenden Zusätzen,
b) Copolymere aus Ethylen, dem inneren Anhydrid einer ethylenisch ungesättigten Dicarbonsäure und gegebenenfalls (Meth)acrylsäureestern und/oder Vinylestern sowie
c) weitere Hilfsstoffe wie z.B. Verträglichkeitsverbesserer und Klebrigmacher.
Derartige Zusammensetzungen vermögen zwar Ethylen oder Propylen ohne die sonst übliche Vorbehandlung mit hohen Festigkeiten zu verkleben, auch die Tieftemperatureigenschaften sind bei -20 °C und darunter noch bemerkenswert gut, aber der bekannte Schmelzklebstoff zeigt folgenden Nachteil: Die Erweichungspunkte sind z. B. für eine Verarbeitung von Schrumpfartikeln zu hoch. Hier werden generell Erweichungspunkte von < 130 °C gefordert.

Auch der Schmelzklebstoff gemäß der EP-A1-0 040 926 beschreibt einen Schmelzklebstoff zum Verkleben von unbehandeltem Polyethylen. Er enthält als Komponenten
a) ein Polyamid, basierend auf einer oder mehreren dimeren Fettsäuren,
b) ein Ethylen/Acrylsäure/Butylacrylat-Terpolymer mit freien Carboxylgruppen sowie gegebenenfalls
c) ein Acrylkautschuk, der vorzugsweise ein Copolymeres aus Ethylacrylat, Butylacrylat, Methoxyethylacrylat und Ethoxyethylacrylat ist.
Es werden hier allerdings keine Angaben zur Viskosität und zum Erweichungspunkt gemacht, so daß nicht ausgeschlossen werden kann, daß die hier beschriebenen Produkte für bestimmte Anwendungen, wie z. B. für die Verarbeitung von Schrumpfartikeln nicht geeignet sind. Bei der Haftung auf unvorbehandeltem Polyethylen ist zu beachten, daß oft nicht nur hohe Festigkeiten, sondern auch ein ausgewogenes Verhältnis von Adhäsion zur Substratoberfläche/innere Kohäsion gefordert wird, damit neben hohen Festigkeitswerten bei Schältests auch ein kohäsives Bruchbild auftritt. Auch dies wird in EP-A1-0 040 926 nicht beschrieben.

Die US-A-4 552 819 beschreibt einen Schmelzklebstoff zur Beschichtung von schrumpffähigen Formteilen aus Polyethylen für die Elektro-Industrie, insbesondere die Kabel-Industrie, der folgende Komponenten enthält:
a) 5 bis 30 Gew.-% eines Polyamids auf der Basis von dimerisierten Fettsäuren mit einer Aminzahl von 0,5 bis 15,
b) 50 bis 90 Gew.-% eines Ethylen-Vinylacetat-Copolymeren, das erfindungsgemäß hydrolysiert ist, in den Vergleichsversuchen jedoch nicht,
c) 5 bis 30 Gew.-% eines Blockcopolymeren aus Styrol/Butadien/Styrol oder Styrol/Isopren/Styrol sowie gegebenenfalls
d) Klebrigmacher wie Terpen-, Terpen-Phenol- und Alkylphenol-Harz. Diese Zusammensetzung hat den Nachteil, daß keine Haftung auf unvorbehandeltem Polyethylen erzielt wird. Zudem sind die Erweichungspunkte zu hoch.

Schließlich beschreibt die EP-A1-0 079 178 einen Schmelzklebstoff zum Verkleben von unvorbehandeltem Polyethylen mit folgender Zusammensetzung:
a) Copolymeres aus Ethylen und α,β-ungesättigter Carbonsäure und/ oder deren Alkylester und Vinylacetat, falls das Copolymere keine Alkylestereinheiten enthält,
b) Copolymeres aus Ethylen und ungesättigter Carbonsäure.
Gegebenenfalls kann die Zusammensetzung noch thermoplastische Kunststoffe wie z.B. Polyethylen enthalten. Derartige Zusammensetzungen haben den Nachteil, daß sie eine unzureichende Chemikalienbeständigkeit zeigten.

Die DE-OS 23 47 799 beschreibt wärmerückstellfähige Formteile aus vernetztem Polyethylen mit mindestens einer Schicht eines Schmelzklebers folgender Zusammensetzung:
a) Polyamid auf der Basis von dimerisierter Fettsäure,
b) saure Ethylencopolymere mit einer Säurezahl von etwa 3 bis 80 und
c) ein klebrigmachendes Mittel, insbesondere ein Polyketonharz.
Dieser Schmelzklebstoff hat den Nachteil, daß keine ausreichende Haftung auf unvorbehandeltem Polyethylen erreicht wird.

Hier will die Erfindung Abhilfe schaffen.

Die Erfindung ist in den Patentansprüchen definiert. Sie besteht im wesentlichen in der Auswahl der angegebenen Komponenten.

Der erfindungsgemäße Schmelzklebstoff enthält als wesentliche Komponente mindestens 50 Gew.-% mindestens eines Polyamids auf der Basis von dimerisierter Fettsäure. "Dimerisierte Fettsäuren" werden durch Kupplung von ungesättigten langkettigen einbasischen Fettsäuren, z.B. Linolensäure, Ölsäure, erhalten. Sie ist ein Gemisch vieler Isomerer (siehe R.F. Paschke, L.E. Peterson und D.H. Wheeler, Journal of the American Oil Chemists' Society, 41, 723 (1964). Selbstverständlich können auch Trimere und weitere Oligomere in geringem Maße enthalten sein. Die Säuren sind seit langem bekannt und im Handel erhältlich.

Die erfindungsgemäßen Polyamide sind vorzugsweise folgendermaßen zusammengesetzt:
- bis zu 55, insbesondere 35 bis 49,5 Mol-% dimerisierte Fettsäure sowie
- bis zu 15, insbesondere 0,5 bis 15 Mol-% mindestens einer monomeren Fettsäure mit 12 bis 22 C-Atomen und
- bis zu 35, insbesondere 2 bis 35 Mol-% mindestens eines Polyetherdiamins der allgemeinen Formel

   H₂N - R₁ - O - (R₂O)ₓ - R₃ - NH₂, (I)

   in der
   - x: eine Zahl zwischen 8 und 80, vornehmlir zwischen 8 und 40,
   - R₁ und R₃: gleiche oder verschiedene aliphatische und/oder cycloaliphatische Kohlenwasserstoffreste mit vorzugsweise 2 bis 8 C-Atomen
   - R₂: einen gegebenenfalls verzweigten aliphatischen Kohlenwasserstoffrest mit 1 bis 6 Kohlenstoffatomen darstellt,
   sowie
- bis zu 48, insbesondere 15 bis 48 Mol-% mindestens eines aliphatischen und/oder cycloaliphatischen Diamins mit 2 bis 40 Kohlenstoffatomen,
wobei die dimerisierten Fettsäuren bis zu 2/3 durch aliphatische Dicarbonsäuren mit 4 bis 12 Kohlenstoffatomen ersetzt werden können.

Es ist aber auch günstig, ein Polyamid einzusetzen, welches erhalten wurde aus:
- bis zu 55, insbesondere 35 bis 49,5 Mol-% dimerisierter Fettsäure sowie
- bis zu 15, insbesondere 0,5 bis 15 Mol-% mindestens einer monomeren Fettsäure mit 12 bis 22 C-Atomen und
- bis zu 55, insbesondere 45 bis 55 Mol-% mindestens eines wenigstens 2 primäre und/oder sekundären Aminogruppen tragenden Amins mit 2 bis 40 C-Atomen,
wobei die dimerisierten Fettsäuren bis zu 2/3 durch aliphatische Dicarbonsäuren mit 4 bis 12 Kohlenstoffatomen ersetzt sein können.

Die erfindungsgemäß eingesetzten Polyamide können darüber hinaus noch weitere in Schmelzklebern gängige Rohstoffe enthalten. So sind insbesondere aliphatische Dicarbonsäuren gebräuchlich. Geeignete aliphatische Carbonsäuren weisen vorzugsweise 4 bis 12 C-Atome auf. So sind beispielsweise Glutarsäure, Maleinsäure, Bernsteinsäure, Adipinsäure, Pimelinsäure, Korksäure oder auch Sebacinsäure geeignet. Durch diese Säuren kann Dimerfettsäure molmäßig bis zu 2/3 ersetzt werden. Dabei ist es dem Fachmann bekannt, daß durch Zusatz von Sebacinsäure der Schmelzpunkt der Polyamide in gewissen Grenzen erhöht werden kann. Weitere im Schmelzkleber mögliche Rohstoffe sind langkettige Aminocarbonsäuren wie 11-Aminoundecansäure oder auch Lauryllactam. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bezüglich der Aminkomponenten in den Polyamiden ist auszuführen, daß hier Polyetherpolyole mit primären Aminoendgruppen bevorzugt sind. Geeignete Polyetherpolyole mit Aminoendgruppen basieren auf Polyethylenglykol, Polypropylenglykol oder Polytetrahydrofuran. Dabei sind Polyetherpolyole mit Aminoendgruppen bevorzugt, die nicht oder nur geringfügig wasserlöslich sind. Die eingesetzten Polyetherpolyole mit Aminoendgruppen weisen Molekulargewichte zwischen 700 und 3 500 oder auch zwischen 1 200 und 2 500 auf. Eine besonders geeignete Rohstoffklasse sind beispielsweise die Bis-(3-aminopropyl)-polytetrahydrofurane eines Molekulargewichts zwischen 700 und 3 500 oder die Bis-(2-aminopropyl)-polyoxypropylene eines Molekulargewichts zwischen 1 200 und 2 500. Weiterhin können auch primäre lineare Alkylendiamine mit 2 bis 10 C-Atomen eingesetzt werden etwa Hexamethylendiamin, 1,3-Diaminopropan, 1,4-Diaminobutan. Geeignet ist auch Piperazin, Tallowdiamin und Dipiperidylpropan.

Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Bezüglich des molekularen Aufbaus der den erfindungsgemäßen verträglichen Mischungen zugrunde liegenden Polyamide ist das Folgende auszuführen: Dem auf diesem Gebiete tätigen Fachmann ist es bekannt, daß monofunktionelle, difunktionelle und trifunktionelle Rohstoffe in einem bestimmten Verhältnis eingesetzt werden, um schmelzbare, d.h. nicht vernetzte Produkte zu erhalten. Es gilt hier das allgemeine Fachwissen der Polymerchemie. Danach kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Rezepturen gelangt werden, die nicht zur Vergelung neigen. Das Molekulargewicht der erfindungsgemäßen Schmelzkleber läßt sich am besten durch Endgruppen-Titration der Amino- oder Säureendgruppen über das Molekulargewicht der Einzelkomponenten errechnen. Erfindungsgemäß bevorzugte Schmelzkleber weisen nur eine Art von funktionellen Endgruppen auf, d.h. sie stellen Amine oder Carbonsäuren dar. So weisen beispielsweise Polyamide mit einer Restsäurezahl günstige Eigenschaften auf. Die Restsäurezahl liegt dabei im Bereich 1 bis 50, vorzugsweise 2 bis 30 und insbesondere 4 bis 12. Für viele Verwendungszwecke sind jedoch Polyamide mit Aminoendgruppen bevorzugt. Diese weisen Aminzahlen zwischen 2 und 15, vorzugsweise zwischen 4 und 10 auf.

Die erfindungswesentliche Komponente "Ethylen-Copolymer" kann ein Copolymerisat aus Ethylen und Vinylacetat sein. Derartige Copolymerisate sind bekannt und im Handel erhältlich. Vorzugsweise enthalten sie 14-40 % Vinylacetat. Der Schmelzindex liegt zwischen 25 und 2 500.

Von besonderer Bedeutung bei Copolymerisaten aus Ethylen und Acrylat oder Methacrylat sind folgende Ester: Methyl-, Ethyl-, Propyl-, Butyl-, 2-Ethyl-hexylester und Ester mit sogenannten Fettalkoholen mit 12 bis 18 C-Atomen, die auch ungesättigt sein können. Ein Teil des (Meth-)acrylsäureesters kann auch durch Ester des Vinylalkohols, z.B. Vinylacetat oder durch Vinylester von C₃-C₁₈-Carbonsäuren ersetzt werden. Auch das Ethylen kann durch Propylen ersetzt werden, und zwar bis zu einem Ausmaß von 15 Mol-%.
Vorzugsweise werden Ethylen-Copolymere aus 80 bis 90 Gew.-% Ethylen und 10 bis 20 Gew.-% an Estern der (Meth-)acrylsäure eingesetzt. Im allgemeinen verwendet man um so geringere Anteile an Ester je länger die Alkoholkomponente ist.
Vorzugsweise beträgt ihr Molekulargewicht (Gewichtsmittel) etwa 50 000 bis 250 000.
Auch die Copolymerisate aus Ethylen und (Meth-)acrylsäureester sind an sich bekannt. Sie können in üblicher Weise durch radikalische Polymerisation hergestellt werden.

Bei der dritten wesentlichen Komponente handelt es sich um mindestens ein Copolymerisat aus Styrol mit Ethylen, Isopren und/oder Butylen. Dabei handelt es sich vorzugsweise um thermoplastische Elastomere aus Blockpolymeren mit Styrol im harten Polymersegment und Butadien bzw. Isopren sowie vorzugsweise Ethylen und Butylen in den weichen Polymersegmenten. Bevorzugt wird also das Blockpolymerisat Styrol-Ethylen/Butylen-Styrol. Es hat vorzugsweise folgende Zusammensetzung und Eigenschaften: 14-29 % Styrol; 71 - 86 % elastische Anteile. Augrund seiner zweiphasigen Struktur werden im Gegensatz zu statistischen Copolymerisaten zwei Glasumwandlungstemperaturen beobachtet. Weitere Vorteile sind eine hohe Festigkeit, hohe Elastitzität und hohes Rückstellvermögen sowie die Flexibilität bei niedrigen Temperaturen.
Auch diese Komponente ist an und für sich bekannt. Sie ist im Handel erhältlich.
Als Weichmacher (plastifizierende Komponenten) werden Stoffe eingesetzt, die die Einfriertemperatur, die elastischen Eigenschaften und die Härte verringern. Es handelt sich dabei um mindestens einen Stoff der Stoffklassen wie z.B. Phthalsäureester, Hydroxycarbonsäureester und Polymerweichmacher. Bevorzugt werden Phthalsäureester, Hydroabietylalkohol oder Polybuten eingesetzt. Bei dem Hydroabietylalkohol handelt es sich um einen hochmolekularen primären Alkohol einer hydrierten Kolophoniumsäure. Er ist im Handel erhältlich unter dem Namen Abitol bei der Firma Hercules. Bei dem Polybuten handelt es sich um ein Isobutylen-Buten Copolymer, das aus in der Regel hochmolekularen Monoolefinen mit geringem Isoparaffingehalt hergestellt wird. Bei den Phthalsäureestern handelt es sich z.B. um ULTRAMOLL PP (ein Phthalsäurepolyester) oder um CELLOLYN 21 (einem Phthalatester von technischem Hydroabiethylalkohol der Fa. Hercules).

In manchen Fällen erweist es sich als vorteilhaft, außerdem auch noch mindestens ein klebrigmachendes Harz zuzusetzen. Unter einem "klebrigmachenden Harz" werden Harze verstanden, die die Zusammensetzung klebrig machen, so daß nach kurzem leichtem Andruck andere Gegenstände fest daran haften. Sie brauchen selbst bei Zimmertemperatur nicht klebrig zu sein. Sie haben im allgemeinen relativ niedrige Molekulargewichte von ca. 200 bis 2 000 und eine große Uneinheitlichkeit. Folgende Stoffklassen eignen sich: Kolophonium und seine Derivate sowie Petroleum-Harze, insbesondere Polycyclopentadien, Polyterpen und flüssiges Kohlenwasserstoffharz. Konkrete Handelsprodukte sind z.B. SYNTHALAT DR 585-806 und TENREZ G 304 (Triethylenglykolester des Kolophoniums der Fa. Erbslöh), ABALYNE (ein Methylester des Kolophoniums der Fa. Hercules), HERCOLYN D und HERCOLYN DE (hydrierte Methylester des Kolophoniums der Fa. Hercules), PICCOVAR L 30 und L 60 (aromatische Kohlenwasserstoffe der Fa. Hercules) und ESCOREZ 2520 (ein flüssiger Kohlenwasserstoff der Fa. Exxon).

Auch ein Zusatz mindestens eines Copolymeren aus Ethylen, Propylen oder Butylen und/oder Maleinsäureanhydrid kann vorteilhaft sein. Vorzugsweise enthält der Schmelzklebstoff 2 bis 8 Gew.-% an Harz und 2,5 bis 10 Gew.-% des Copolymeren aus Ethylen und Maleinsäureanhydrid.

Die erfindungsgemäße Zusammensetzung ist eine verträgliche Polymermischung. Als "verträglich" werden hier Mischungen angesehen, die im festen Zustand und bis zu der über dem Schmelzpunkt liegenden Verarbeitungstemperatur für das Auge homogen und einphasig erscheinen. Physikalisch handelt es sich dabei entweder um echte Lösungen oder aber auch um feinteilige Dispersionen des einen Polymeren in der Matrix des anderen. Ein Indiz für die Homogenität ist darin zu sehen, daß im DSC-Diagramm nur eine Glastemperatur (Tg) zu erkennt ist (Geschwindigkeit: 15 °C/Min.; 2. Lauf; Starttemperatur: -120 °C; Endtemperatur: 300 °C). Wenn nur eine Glastemperatur zu beobachten ist, dann ist die Zusammensetzung auf jeden Fall "homogen" im Sinne der Erfindung. Es können aber auch unter Umständen mehrere Glastemperaturen vorkommen.

Neben den genannten Bestandteilen können die erfindungsgemäßen Klebstoffe noch weitere gängige Hilfsstoffe enthalten. So können Antioxidantien, Stabilisatoren gegen Licht- oder Wärmefüllstoffe, Farbpigmente, Konservierungsmittel oder Fungicide in untergeordneter Menge beigefügt sein. Üblicherweise werden diese Hilfsstoffe in einer Menge von 0,5 bis 2 Gew.-% hinzugefügt.

Alle Angaben in Gew.-% beziehen sich auf den fertigen Schmelzklebstoff.
Der erfindungsgemäße Klebstoff hat folgende physikalische Eigenschaften:
Die Schmelzklebstoffe erweichen im Bereich von 90 °C bis 140 °C, vorzugsweise im Bereich von 90 bis 110 °C. Ihre Schmelzviskositäten bei 160 °C liegen vornehmlich im Bereich von 10 000 bis 180 000 mPas vorzugsweise im Bereich von 20 000 bis 100 000 mPa·s. Die Wärmestandfestigkeit liegt in der Regel über 60 °C, vorzugsweise über 80 °C.

Vorzugsweise wird der Schmelzklebstoff hergestellt, indem man den Weichmacher und das klebrigmachende Harz bei 160-180 °C mischt, dieser Mischung das Styrol-Copolymer hinzufügt und löst. Dann wird das Ethylen-Copolymer zugefügt, also entweder das Ethylen-Vinyl-Acetat-Copolymer oder das Ethylen(meth-)acrylat-Copolymer, und homogenisiert. Schließlich fügt man das Polyamid und abschließend das Copolymerisat f) zu und homogenisiert weiter bei 190 °C.
Der erfindungsgemäße Schmelzklebstoff wird im allgemeinen aus der Schmelze über Förder- und Dosiereinrichtungen appliziert.

Die Schmelze kann auf Vorrat gehalten werden oder durch Abschmelzen von Formkörpern wie Zylindern, Fäden, Drähten oder sonstigen Profilen gewonnen werden. Unmittelbar nach dem Auftragen des flüssigen Klebstoffilms sollten die Klebeflächen unter leichtem Druck miteinander verbunden werden, bis die eigentliche Klebung eingetreten ist.

Die erfindungsgemäßen Klebstoffe eignen sich zum Verkleben einer Vielzahl von Substraten. So können beispielsweise Metalle verklebt werden wie Eisen, Aluminium oder Nickel, Metallegierungen wie Messing und insbesondere das ansonsten schwer zu verklebende Kupfer. Weiterhin können polare wie unpolare Kunststoffe verklebt werden etwa Polyvinylchlorid, Polycarbonate, Polymerisate. Besonders geeignet sind die erfindungsgemäßen Schmelzkleber zur Verklebung unpolarer Polymerer, insbesondere zur Verklebung von Polyolefinen, also von Polyethylen, Polypropylen und Polybutylen sowie Mischungen dieser Polymerisate einschließlich deren Copolymerisate. Dabei ist es eine herausragende Eigenschaft der erfindungsgemäßen Systeme, daß P-VC und Polyethylen - ohne die sonst übliche Vorbehandlung - oder Metalle, insbesondere Kupfer, Blei und Aluminium mit hoher Festigkeit verklebt werden kann, wobei die Bruchbilder nach Schälfestigkeitstests durchgängig kohäsiv sind. Dabei kann das PVC sogar eine große Tendenz zur Migration von Weichmachern haben.

Mit "ohne die sonst übliche Vorbehandlung" ist nicht die physikalische Vorbehandlung, z.B. Abwischen mit Tüchern oder Abwaschen mit Lösungsmitteln, sondern die chemische Vorbehandlung, insbesondere die Coronabehandlung und das Abflammen gemeint. Es ist weiterhin hervorzuheben, daß die Einzelkomponenten der Polymermischungen sich zu Verklebungen dieser Art in keiner Weise eignen. Von besonderer Wichtigkeit sind die guten Tieftemperatureigenschaften der erfindungsgemäßen Polymermischungen. So wurde auch bei Temperaturen von -40 °C oder darunter selbst bei langer Lagerzeit keine Versprödung beobachtet.

Darüber hinaus liegen die Viskositäten und Erweichungspunkte in solchen Bereichen, daß ein breites Anwendungspektrum abgedeckt werden kann. Vor allem können die erfindungsgemäßen Schmelzklebstoffe auch zur Coextrusion mit Polyethylen oder Polypropylen verwendet werden.

Aufgrund dieser positiven Eigenschaften der erfindungsgemäßen Schmelzklebstoffe eignen sie sich besonders zum Verkleben von Kunststoffen und Metallen in der Elektroindustrie, insbesondere zum Verbinden von Kabeln und Leitungen. Hierzu werden mit Schmelzklebstoffen beschichtete Muffen, Endkappen, Rohre, Schläuche vor allem aus Polyethylen eingesetzt, die beim Erwärmen schrumpfen und möglichst gleichzeitig klebrig werden. So erhält man nach dem Abkühlen eine sehr feste Bindung. Sie ist nämlich trotz der unterschiedlichen Materialien aus sehr schwierig zu verklebenden Stoffen wie Polyethylen und Kupfer zuverlässig fest und vermag hohe Temperaturschwankungen zwischen -30 °C und +70 °C auszuhalten. Auch weitere Anforderungen wie Pilz- und Fäulnisbeständigkeit sowie keine Korrosivität werden erfüllt.

Die Erfindung wird an Hand von folgenden Beispielen näher erläutert:

### Beispiel 1

Zu
- 120 g: ABITOL der Firma Hercules (Hydroabiethol) und
- 50 g: ESCOREZ 2520 der Firma Exxon (flüssiges Kohlenwasserstoff-Harz)
wurden unter Rühren mit einem Doppel-Wendel-Rührer bei 160-180 °C 25 g KRATON G 1652 der Firma Shell (Styrol/Ethylen/Butylen/Styrol-Blockcopolymeres) portionsweise innerhalb von 10 Minuten zugegeben. In 15 Minuten entstand eine klare Lösung. Nach Zusatz von 150 g ESCORENE UL 53019 CC der Firma Exxon (Ethylen-Vinylacetat-Copolymer) wurde die Mischung bei 180-190 °C innerhalb von 20-30 Minuten homogenisiert. Danach wurden 625 g MACROMELT 6735 der Firma Henkel KGaA (thermoplastisches Polyamid) innerhalb von 15-20 Minuten und schließlich 30 g EPOLENE C 16 der Firma Eastman (Ethylen-Maleinsäure-Copolymer) innerhalb von 5-10 Minuten hinzugefügt. Zum Schluß wurde noch 20-30 Minuten bei 190 °C gerührt.
Der erhaltene Schmelzklebstoff hatte einen Erweichungsbereich zwischen 90 und 100 °C und eine Schmelzviskosität von 15 000-25 000 mPa·s. bei 160 °C. Seine Schälfestigkeit für vPE/vPE betrug 140 N/25 mm (Winkelschälversuch). Der Bruch zeigte eine 100 %ig kohäsive Trennung.

### Beispiel 2

Der Versuch wurde entsprechend Beispiel 1 durchgeführt mit folgender Ausnahme: Anstelle von 120 g ABITOL wurden 60 g Polybuten der Firma Amoco eingesetzt und anstelle von 625 g MACROMELT 6735 wurden 685 g eingesetzt.
Bei gleichem Schmelzbereich veränderte sich dadurch die Schmelzviskosität von 35 000 auf 40 000 mPa·s. Die Schälfestigkeit erhöhte sich auf 220 N/25 mm. Der Bruch war ebenfalls 100 %ig kohäsiv.

### Vergleichsversuch

Es wurde ein Schmelzklebstoff entsprechend Beispiel 1 hergestellt mit der Ausnahme, daß kein ABITOL oder Polybuten hinzugefügt wurde. Dann wurde 40N/25 mm erhalten. Das Bruchbild war adhäsiv.

Die Messungen wurden entsprechend folgender Beschreibung durchgeführt:

### 1. R + B (Erweichungspunkt)

Der Erweichungspunkt in °C wurde nach der Ring + Ball-Methode (R + B) nach ASTM E - 28 gemessen.

### 2. Viskosität

Die Viskosität in mPa·s wurde unter Verwendung eines Brookfield Thermocel Viscosimeters Typ RVT mit der Spindel 27 bei 160 °C oder 210 °C gemessen.

### 3. Schälfestigkeit

Die Schälfestigkeit wurde als T-peel-Test durchgeführt an unvorbehandelten vernetzten Polyethylen-Folien aus für die Kabelherstellung eingesetzten, extrudierfähigen Polymerisaten mit einer Dicke von 1 mm.
- Prüfkörper:: 120 - 25 mm
Überlappung 50 mm
- Verklebung:: Zwischen die zu verklebenden Werkstoffe wurde ein 1 mm starker Polyamid-Blend-Film positioniert und unter einer Presse bei 150 °C bei 7 bar während 5 Minuten gefügt.
- Konditionierung:: 24 h bei 20 °C und ca. 60 % relativer Luftfeuchtigkeit.

### Prüfung

20 °C, 50 mm Abzugsgeschwindigkeit.

### 4. Wärmestandfestigkeit (Henkel interne Prüfmethode)

Zwei 25,0 mm breite Streifen aus flexiblem Karton werden überlappend (25,0 mm Überlappungslänge) verklebt. die Verklebung wird mit 13,5 N (0,02 N/mm²) belastet und in einem Umlufttrokkenschrank einem Temperaturanstieg von 5°/10 min. ausgesetzt. Als Wärmestandfestigkeit wird die Temperatur bezeichnet, bei der sich die Verklebung noch nicht löst.

## Patentansprüche

1. Schmelzklebstoff aus einer Zusammensetzung, enthaltend
a) mindestens 50 Gew.-% mindestens eines Polyamids auf der Basis von dimerisierter Fettsäure,
b) 5 bis 20 Gew.-% mindestens eines Ethylen-Copolymeren aus der Gruppe: Ethylen-Vinylacetat, Ethylen-Acrylat oder Ethylen-Methacrylat, wobei die Alkoholkomponente 1 bis 18 C-Atome enthält,
c) 2 bis 10 Gew.-% mindestens eines Block-Copolymeren aus Styrol mit Ethylen, Isopren und/oder Butylen,
d) 5 bis 25 Gew.-% mindestens eines Weichmachers,
e) 0 bis 10 Gew.-% mindestens eines klebrigmachenden Harzes aus der Gruppe: Polycyclopentadien, Polyterpen, flüssiges Kohlenwasserstoff-Harz und
f) 0 bis 15 Gew.-% mindestens eines Copolymeren aus Ethylen, Propylen, Butylen und/oder Maleinsäureanhydrid.

2. Schmelzklebstoff nach Anspruch 1, dadurch gekennzeichnet, daß Polyamide der folgenden Zusammensetzung eingesetzt werden:
- bis 55 Mol-% dimerisierte Fettsäure sowie
- bis 15 Mol-% mindestens einer monomeren Fettsäure mit 12 bis 22 C-Atomen
und
- bis 35 Mol-% mindestens eines Polyetherdiamins der allgemeinen Formel
H₂N - R₁ - O - (R₂O)ₓ - R₃ - NH₂, (I)
in der
x eine Zahl zwischen 8 und 80, vornehmlich zwischen 8 und 40,
R₁ und R₃ gleiche oder verschiedene aliphatische und/oder cycloaliphatische Kohlenwasserstoffreste mit vorzugsweise 2 bis 8 C-Atomen
R₂ einen gegebenenfalls verzweigten aliphatischen Kohlenwasserstoffrest mit 1 bis 6 Kohlenstoffatomen darstellt,
sowie
- bis 48 Mol-% mindestens eines aliphatischen und/oder cycloaliphatischen Diamins mit 2 bis 40 Kohlenstoffatomen,
wobei die dimerisierten Fettsäuren bis zu 2/3 durch aliphatische Dicarbonsäuren mit 4 bis 12 Kohlenstoffatomen ersetzt werden können.

3. Schmelzklebstoff nach Anspruch 1, dadurch gekennzeichnet, daß er ein Polyamid enthält aus
- bis 55 Mol-% dimerisierter Fettsäure sowie
- bis 15 Mol-% mindestens einer monomeren Fettsäure mit 12 bis 22 C-Atomen und
- bis 55 Mol-% mindestens eines wenigstens 2 primäre und/oder sekundäre Aminogruppen tragenden Amins mit 2 bis 40 C-Atomen,
wobei die dimerisierten Fettsäuren bis zu 2/3 durch aliphatische Dicarbonsäuren mit 4 bis 12 Kohlenstoffatomen ersetzt sein können.

4. Schmelzkleber nach mindestens einem der Ansprüche 1 bis 3, gekennzeichnet durch ein Polyamid mit einer Säurezahl von 1 bis 50, vorzugsweise von 2 bis 30, insbesondere von 4 bis 12.

5. Schmelzkleber nach mindestens einem der Ansprüche 1 bis 4, gekennzeichnet durch ein Polyamid mit einer Aminzahl von 2 bis 15, vorzugsweise von 4 bis 10.

6. Schmelzklebstoff nach mindestens einem der Ansprüche 1 bis 5, dadurch gekennzeichnet, daß das Ethylencopolymere ein Ethylen-Vinyl-Acetat mit 14-40 % Vinylacetatanteil ist.

7. Schmelzklebstoff nach mindestens einem der Ansprüche 1 bis 6, dadurch gekennzeichnet, daß das Styrol-Copolymer ein Styrol/Butadien- bzw. Styrol/Isopren-, vorzugsweise ein Styrol/Ethylen/Butylen/Styrol-Blockcopolymer ist.

8. Schmelzklebstoff nach mindestens einem der Ansprüche 1 bis 7, gekennzeichnet durch 2 bis 8 Gew.-% Harz.

9. Schmelzklebstoff nach mindestens einem der Ansprüche 1 bis 8, gekennzeichnet durch 2,5 bis 10 Gew.-% eines Copolymeren aus Ethylen oder Propylen und/oder Maleinsäureanhydrid.

10. Herstellung des Schmelzklebstoffs nach mindestens einem der Ansprüche 1 bis 9, dadurch gekennzeichnet, daß man zu den Komponenten d) und e) die Komponente c) hinzufügt und löst, dann die Komponente b) hinzufügt und homogenisiert und schließlich die Komponenten a) und f).

11. Verwendung des Schmelzklebstoffs nach mindestens einem der Ansprüche 1 bis 9 zum Verkleben von unvorbehandeltem Polyethylen und Polyvinylchlorid oder Metallen, insbesondere Kupfer, Blei und Aluminium miteinander oder mit sich selbst, wobei PVC mit großer Tendenz zur Migration von Weichmachern bevorzugt wird.

12. Verwendung des Schmelzklebstoffs nach mindestens einem der Ansprüche 1 bis 9 zur Coextrusion mit Polyethylen oder Polypropylen.

13. Schrumpfbare Formteile mit zumindest einseitiger Beschichtung mit dem Schmelzklebstoff nach mindestens einem der Ansprüche 1 bis 9, wobei die Formteile vorzugsweise auf vernetztem Polyethylen oder Polypropylen basieren.

## Claims

1. A hotmelt adhesive containing
a) at least 50% by weight of at least one polyamide based on dimerized fatty acid,
b) 5 to 20% by weight of at least one ethylene copolymer from the group consisting of ethylene/vinyl acetate, ethylene/acrylate or ethylene/methacrylate, the alcohol component containing 1 to 18 carbon atoms,
c) 2 to 10% by weight of at least one block copolymer of styrene with ethylene, isoprene and/or butylene,
d) 5 to 25% by weight of at least one plasticizer,
e) 0 to 10% by weight of at least one tackifying resin from the group consisting of polycyclopentadiene, polyterpene, liquid hydrocarbon resin and
f) 0 to 15% by weight of at least one copolymer of ethylene, propylene, butylene and/or maleic anhydride.

2. A hotmelt adhesive as claimed in claim 1, characterized in that polyamides of the following composition are used:
- up to 55 mole-% of dimerized fatty acid,
- up to 15 mole-% of at least one monomeric fatty acid containing 12 to 22 carbon atoms and
- up to 35 mole-% of at least one polyether diamine corresponding to the following general formula:
H₂N - R₁ - O - (R₂O)ₓ - R₃ - NH₂ (I)
x is a number of 8 to 80, mainly 8 to 40,
R₁ and R₃ may be the same or different and represent aliphatic and/or cycloaliphatic hydrocarbon radicals preferably containing 2 to 8 carbon atoms,
R₂ is an optionally branched aliphatic hydrocarbon radical containing 1 to 6 carbon atoms,
and
- up to 48 mole-% of at least one aliphatic and/or cycloaliphatic diamine containing 2 to 40 carbon atoms,
up to two thirds of the dimerized fatty acids being replaceable by aliphatic dicarboxylic acids containing 4 to 12 carbon atoms.

3. A hotmelt adhesive as claimed in claim 1, characterized in that it contains a polyamide of
- up to 55 mole-% of dimerized fatty acid,
- up to 15 mole-% of at least one monomeric fatty acid containing 12 to 22 carbon atoms and
- up to 55 mole-% of at least one C₂₋₄₀ amine containing at least two primary and/or secondary amino groups,
up to two thirds of the dimerized fatty acids being replaceable by aliphatic dicarboxylic acids containing 4 to 12 carbon atoms.

4. A hotmelt adhesive as claimed in at least one of claims 1 to 3, characterized by a polyamide with an acid value of 1 to 50, preferably 2 to 30 and more preferably 4 to 12.

5. A hotmelt adhesive as claimed in at least one of claims 1 to 4, characterized by a polyamide with an amine value of 2 to 15 and preferably 4 to 10.

6. A hotmelt adhesive as claimed in at least one of claims 1 to 5, characterized in that the ethylene copolymer is an ethylene/vinyl acetate copolymer containing 14 to 40% of vinyl acetate.

7. A hotmelt adhesive as claimed in at least one of claims 1 to 6, characterized in that the styrene copolymer is a styrene/butadiene or styrene/isoprene block copolymer, preferably a styrene/ethylene/butylene/styrene block copolymer.

8. A hotmelt adhesive as claimed in at least one of claims 1 to 7, characterized by 2 to 8% by weight of resin.

9. A hotmelt adhesive as claimed in at least one of claims 1 to 8, characterized by 2.5 to 10% by weight of a copolymer of ethylene or propylene and/or maleic anhydride.

10. A process for the production of the hotmelt adhesive claimed in at least one of claims 1 to 9, characterized in that component c) is added to components d) and e) and dissolved therein, component b) is added and homogenized and, finally, components a) and f) are added and homogenized.

11. The use of the hotmelt adhesive claimed in at least one of claims 1 to 9 for bonding non-pretreated polyethylene and polyvinyl chloride or metals, more particularly copper, lead and aluminium, to one another or to materials of the same type, PVC with a pronounced tendency towards plasticizer migration being preferred.

12. The use of the hotmelt adhesive claimed in at least one of claims 1 to 9 for co-extrusion with polyethylene or polypropylene.

13. Shrinkable mouldings coated on at least one side with the hotmelt adhesive claimed in at least one of claims 1 to 9, the mouldings preferably being based on crosslinked polyethylene or polypropylene.

## Revendications

1. Colle à fusion préparée à partir d'une composition renfermant
a) au moins 50 % en poids d'un polyamide à base d'acide gras dimérisé,
b) 5 à 20 % en poids d'au moins un copolymère d'éthylène appartenant au groupe: éthylène-acétate de vinyle, éthylène-acrylate ou éthylène-méthacrylate, le composant alcool contenant 1 à 18 atomes de C,
c) 2 à 10 % en poids d'au moins un copolymère à blocs constitué de styrène avec de l'éthylène, de l'isoprène et/ou du butylène,
d) 5 à 25 % en poids d'au moins un plastifiant,
e) 0 à 10 % en poids d'au moins une résine rendant adhésive appartenant au groupe: polycyclopentadiène, polyterpène, résine d'hydrocarbure liquide et
f) 0 à 15 % en poids d'au moins un copolymère à base d'éthylène, de propylène, de butylène et/ou d'anhydride maléique.

2. Colle à fusion selon la revendication 1, caractérisée en ce que l'on utilise des polyamides présentant la composition ci-après:
- jusqu'à 55 moles % d'acide gras dimérisé, ainsi que
- jusqu'à 15 moles % d'au moins un acide gras monomère comportant 12 à 22 atomes de C et
- jusqu'à 35 moles % d'au moins une polyétherdiamine de la formule générale
H₂N - R₁ - O - (R₂O)ₓ - R₃ - NH₂ (I)
dans laquelle
x représente un nombre entre 8 et 80, en particulier entre 8 et 40,
R₁ et R₃ correspondent à des radicaux d'hydrocarbure aliphatiques et/ou cycloaliphatiques identiques ou différents, comportant de préférence 2 à 8 atomes de C
R₂ est un radical d'hydrocarbure éventuellement ramifié, possédant 1 à 6 atomes de carbone
ainsi que
- jusqu'à 48 moles % d'au moins une diamine aliphatique et/ou cycloaliphatique comportant 2 à 40 atomes de carbone,
les acides gras dimérisés pouvant être remplacés jusqu'à concurrence des 2/3 par des acides dicarboxyliques aliphatiques comportant 4 à 12 atomes de carbone.

3. Colle à fusion selon la revendication 1, caractérisée en ce qu'elle renferme un polyamide constitué de
- jusqu'à 55 moles % d'acide gras dimérisé, ainsi que
- jusqu'à 15 moles % d'au moins un acide gras monomère comportant 12 à 22 atomes de C et
- jusqu'à 55 moles % d'au moins une amine présentant 2 à 40 atomes de carbone, portant au moins 2 groupes amino primaires et/ou secondaires,
les acides gras dimérisés pouvant être remplacés jusqu'à concurrence des 2/3 par des acides dicarboxyliques aliphatiques comportant 4 à 12 atomes de carbone.

4. Colle à fusion selon au moins une des revendications 1 à 3, caractérisée par un polyamide possédant un indice d'acidité de 1 à 50, de préférence de 2 à 30, en particulier de 4 à 12.

5. Colle à fusion selon au moins une des revendications 1 à 4, caractérisée par un polyamide présentant un indice d'amine de 2 à 15, de préférence de 4 à 10.

6. Colle à fusion selon au moins une des revendications 1 à 5, caractérisée en ce que le copolymère d'éthylène est un éthylène-acétate de vinyle avec 14 à 40 % de fraction acétate de vinyle.

7. Colle à fusion selon au moins une des revendications 1 à 6, caractérisée en ce que le copolymère de styrène est un copolymère à blocs de styrène-butadiène ou de styrène-isoprène, de préférence, de styrène/éthylène/butylène/styrène.

8. Colle à fusion selon au moins une des revendications 1 à 7, caractérisée par 2 à 8 % en poids de résine.

9. Colle à fusion selon au moins une des revendications 1 à 8, caractérisée par 2,5 à 10 % en poids d'un copolymère d'éthylène ou de propylène et/ou d'anhydride maléique.

10. Préparation de la colle à fusion selon au moins une des revendications 1 à 9, caractérisée en ce que l'on ajoute aux composants d) et e), le composant c) et on le dissout, on additionne ensuite le composant b) et on l'homogénéise, et enfin les composants a) et f).

11. Utilisation de la colle à fusion selon au moins une des revendications 1 à 9 pour le collage entre eux ou avec eux-mêmes du polyéthylène et du chlorure de polyvinyle non prétraités ou de métaux, en particulier le cuivre, le plomb ou l'aluminium, le PVC présentant une grande tendance à la migration des plastifiants étant préféré.

12. Utilisation de la colle à fusion selon au moins une des revendications 1 à 9 pour la coextrusion avec le polyéthylène ou le polypropylène.

13. Pièces moulées rétractiles enduites au moins d'un côté de la colle à fusion selon au moins une des revendications 1 à 9, les pièces moulées étant de préférence à base de polyéthylène ou de polypropylène réticulé.
